# EUROPÄISCHE PATENTSCHRIFT

(11) **EP 3 283 338 B1**
(45) Veröffentlichungstag und Bekanntmachung des Hinweises auf die Patenterteilung: **30.11.2022**
(21) Anmeldenummer: 16719308.5
(22) Anmeldetag: 15.04.2016
(51) Int. Cl.: B60T 8/17, B60T 13/66, B60T 8/18, B60T 8/32, B60T 17/22

(54) **SELEKTIVE BREMSKRAFTVERTEILUNG FÜR SCHIENENFAHRZEUGE**
SELECTIVE BRAKING FORCE DISTRIBUTION FOR RAIL VEHICLES
DISTRIBUTION DE FORCE DE FREINAGE SÉLECTIVE POUR VÉHICULES FERROVIAIRES

(30) Priorität: 16.04.2015 DE 102015105792
(43) Veröffentlichungstag der Anmeldung: 21.02.2018
(73) Patentinhaber: KNORR-BREMSE Systeme für Schienenfahrzeuge GmbH, 80809 München (DE)
(72) Erfinder: LORRA, Peter, 81375 München (DE)
(86) Internationale Anmeldenummer: PCT/EP2016/058331
(87) Internationale Veröffentlichungsnummer: WO 2016/166274

(56) Entgegenhaltungen:
- EP-A1- 2 060 459
- EP-A2- 1 266 814
- WO-A1-2004/054840
- GB-A- 2 402 983

## Beschreibung

Die vorliegende Erfindung betrifft eine Vorrichtung und ein Verfahren zum Steuern einer Bremsanlage mit einer Vielzahl von individuellen Drehgestellen oder Wägen zugeordneten Reibungsbremseinrichtungen eines Schienenfahrzeugs. Die Erfindung betrifft außerdem ein Computerprogramm mit Codemitteln zur Ausführung der Schritte des vorgenannten Verfahrens auf einem Computersystem, und ein computerlesbares Speichermedium, auf dem ein Programmcode mit den Codemitteln des Computerprogramms gespeichert ist.

Bremssysteme in Eisenbahnfahrzeugen oder Schienenfahrzeugen sind so ausgestaltet, dass sie die großen bewegten Massen im Rahmen vorgegebener Wege sicher zum Stehen bringen müssen. Hierfür wurden beispielsweise sogenannte Bremstafeln entwickelt, welche für vorbestimmte Bremswege vorgesehen sind. In den Bremstafeln wird ein Zusammenhang zwischen dem Bremsweg, der Höchstgeschwindigkeit, den Neigungsverhältnissen und dem Bremsvermögen des Schienenfahrzeugs (z.B. Zuges) hergestellt. Hieraus ergibt sich mit der stetig steigenden Höchstgeschwindigkeit im Schienenverkehr auch die Notwendigkeit immer leistungsfähigerer Bremssysteme.

Im Allgemeinen sind in Schienenfahrzeugen verschiedene Möglichkeiten der Bremskrafterzeugung vorgesehen. Nach dem physikalischen Wirkprinzip lassen sich die Bremsen in Reibungsbremsen (Bremskrafterzeugung durch Festkörperreibung), elektrodynamische Bremsen (z.B. Wirbelstrombremse) und hydrodynamische Bremsen (z.B. hydraulische Bremsen) einteilen.

Bei der Entwicklung von Bremsanlagen für Schienenfahrzeuge müssen viele verschiedene Bedingungen berücksichtigt werden, um eine Bremsanlage bereitstellen zu können. Einerseits müssen Eigenschaften der Bremsanlage berücksichtigt werden, andererseits müssen ggf. Kundenwünsche und gesetzliche Vorgaben erfüllt werden. Insbesondere bei Bremsanlagen, welche mehrere Bremsen mit unterschiedlichen Wirkungsweisen aufweisen, kann eine Entwicklung der Bremsanlage sehr komplex sein. Neben Erfordernissen hinsichtlich einer zu erreichenden Bremskraft oder Bremskraftverteilung müssen beispielsweise auch thermische Bedingungen bei einem Bremskraftvorgang erfüllt werden.

Aus nachfolgender Problemstellung ergibt sich ein weiteres Erfordernis bei der Auslegung von Bremsanlagen.

Ein Triebzug ist eine mit eigenem Antrieb versehene, im Regelbetrieb nicht trennbare Einheit aus mehreren Fahrzeugen, die je nach Funktion als Triebwagen/Triebkopf, Mittel- und Steuerwagen bezeichnet werden. Vielteilige Gelenktriebwagen werden bspw. als Triebzüge bezeichnet. In solchen Triebzügen werden zum Bremsen im Regelfall (sogenannte Betriebsbremse) eine dynamische Bremseinrichtung und eine Reibungsbremseinrichtung verwendet. In den meisten Fällen wird bei Triebzügen die dynamische Bremseinrichtung typischerweise im unteren Geschwindigkeitsbereich, d.h. in der Nähe und/oder kurz vor dem Anhalten, zurückgenommen, so dass die Bremswirkung ausschließlich durch die Reibungsbremseinrichtung erzielt wird. Um ein ruckfreies und damit gleichmäßiges Anhalten zu erreichen, wird schließlich die Bremskraft auch für die Reibungsbremseinrichtung zurückgenommen. In dieser Phase entstehen durch den Unterschied zwischen Haft- und Gleitreibung unerwünschte quietschende Reibungsgeräusche.

Dokument GB 2 402 983 A offenbart eine Vorrichtung zum Steuern einer Bremsanlage, in der Bremsen von einzelnen Achsen unterschiedlich angesteuert werden können, um ein gleichmäßiges Bremsen eines Schienenfahrzeugs zu erzielen. Um eine tatsächliche Geschwindigkeit des Schienenfahrzeugs zu erfassen, wird eine Bremse einer Achse freigegeben und mittels diese Achse die tatsächliche Geschwindigkeit ermittelt.

Der vorliegenden Erfindung liegt daher die Aufgabe zugrunde, eine Bremsanlage für Schienenfahrzeuge dergestalt weiterzuentwickeln, dass unerwünschte Reibungsgeräusche beim Anhaltevorgang vermieden oder zumindest reduziert werden können.

Diese Aufgabe wird durch die Merkmale der unabhängigen Ansprüche gelöst.

Weitere vorteilhafte Ausgestaltungen und Weiterbildungen der Erfindung ergeben sich aus den abhängigen Ansprüchen.

Im Rahmen dieser Beschreibung kann ein Schienenfahrzeug zum Betrieb auf einer Schiene vorgesehen sein. Das Schienenfahrzeug kann einen oder mehrere Wagen und/oder Zugfahrzeuge aufweisen. Ein Wagen eines Schienenfahrzeugs kann ein Triebwagen sein, der über einen eigenen Antrieb verfügt. Eine Steuereinrichtung zur Steuerung einer Bremsanlage des Schienenfahrzeugs kann als Software, Hardware oder Kombination aus Software und Hardware implementiert sein. Sie kann eine oder mehrere Schnittstellen aufweisen, um geeignete Daten mit anderen Einrichtungen des Schienenfahrzeugs austauschen zu können. Die Steuereinrichtung kann als ein oder mehrere Module und/oder Prozesse und/oder Objekte und/oder Threads implementiert sein. Eine Bremsanlage eines Schienenfahrzeugs kann allgemein mehrere Bremsen aufweisen, die nach unterschiedlichen Prinzipien arbeiten. Solche Bremsen können beispielsweise Reibungsbremsen, dynamische Bremsen, Schienenbremsen oder sonstige Bremsen wie beispielsweise aerodynamische Bremsen sein. Eine Bremse kann mehrere Bremseinrichtungen aufweisen, die zum Bremsen einzelner Wagen, Räder und/oder Radachsen eines Schienenfahrzeugs vorgesehen sein können. Eine Reibungsbremse kann beispielsweise eine Klotzbremse, eine Scheibenbremse oder eine kombinierte Klotz-Scheibenbremse sein. Eine Reibungsbremse kann hydraulisch, pneumatisch oder elektrisch betätigbar sein. Eine hydraulisch betätigte Reibungsbremse kann als hydraulische Bremse bezeichnet werden. Eine pneumatisch betätigte Reibungsbremse kann als pneumatische Bremse bezeichnet sein. Eine pneumatische Bremse kann eine direkte oder indirekte pneumatische Bremse sein. Bei einer direkten pneumatischen Bremse wird ein Bremsdruck direkt auf eine Bremseinrichtung gesteuert, während bei einer indirekten pneumatischen Bremse ein Bremsdruckabfall in einer Hauptsteuerleitung zum indirekten Betätigen einer Bremseinrichtung eingesetzt wird. Reibungsbremsen werden als zuverlässige Ergänzung zu dynamischen Bremsen eingesetzt, da dynamische Bremsen in der Regel nicht in allen Bremssituationen die erforderliche Bremskraft bereitstellen können. Insbesondere werden Reibungsbremsen als Notbremsen eingesetzt, da sie eine hohe Betriebssicherheit aufweisen und auch bei Ausfall von Steuereinheiten zuverlässig hohe Bremskräfte zur Verfügung stellen können. Eine dynamische Bremse kann eine elektro-dynamische Bremse, eine rotierende Wirbelstrombremse oder eine hydrodynamische Bremse sein. Elektro-dynamische Bremsen können beispielsweise Motorbremsen eines Schienenfahrzeugs mit einem Elektromotor sein. Dynamische Bremsen sind im Wesentlichen verschleißfreie Bremsen. Eine dynamische Bremse kann eine generatorische oder regenerative Bremse sein, welches es vermag, bei einer Betätigung während einer Bremsung Energie aus der Bremsung zurückzugewinnen und ggf. zu speichern.

Die aufgezählten Arten von Bremsen weisen jeweils unterschiedliche Bremswirkungsprinzipien auf, bei denen eine Bremskraft unterschiedlich erzeugt wird oder unterschiedliche Betätigungskräfte zur Erzeugung einer Bremskraft wirken. Bremsen einer Bremsanlage können separat voneinander ansteuerbar auf einem Schienenfahrzeug vorgesehen sein. Bei modernen Schienenfahrzeugen werden vorzugsweise dynamische Bremsen eingesetzt, um einen Verschleiß der Bremsen möglichst gering halten zu können. Da dynamische Bremsen im Vergleich zu Reibungsbremsen in der Regel eine geringere Bremswirkung auszuüben vermögen, reicht ihre Bremswirkung nicht für alle Bremssituationen aus. Daher werden bei Bremsvorgängen häufig zusätzlich zu den dynamischen Bremsen Reibungsbremsen und/oder kraftschlussunabhängige Bremsen eingesetzt, um eine gewünschte Bremswirkung zu erreichen. Bei der Auslegung einer Bremsanlage muss allerdings berücksichtigt werden, dass ggf. eine Reibungsbremse allein eine Notbremsung durchführen können muss.

Eine Bremskraft oder Bremswirkung beschreibt allgemein eine Kraft oder Wirkung, die zu einer Abbremsung des Schienenfahrzeugs führt. Auf ein Fahrzeug kann dabei eine Gesamtbremskraft wirken, die sich aus einzelnen Bremskraftbeiträgen mehrerer bei einem Bremsvorgang betätigter Bremsen zusammensetzen kann. Als eine Betätigungskraft kann eine Kraft angesehen werden, die auf eine Bremseinrichtung ausgeübt wird, um eine Bremskraft zu erzeugen. Eine Betätigungskraft kann durch einen Krafterzeuger bereitgestellt sein, beispielsweise einen pneumatisch betätigten Zylinder einer pneumatischen Bremse. Allgemein muss beim Einsatz mehrerer Bremsen gleichzeitig eine aufzubringende Bremskraft auf die unterschiedlichen Bremsen verteilt werden. Diese Bremskraftverteilung wird auch als "Blending" bezeichnet. Blending kann insbesondere eine Bremskraftverteilung zwischen einer dynamischen Bremse und einer Reibungsbremse bezeichnen.

Erfindungsgemäß ist eine Vorrichtung zur Steuerung einer Bremsanlage mit einer Vielzahl von individuellen Drehgestellen oder Wagen zugeordneten Reibungsbremseinrichtungen eines Schienenfahrzeugs vorgesehen. Die Vorrichtung ist ausgestaltet zum selektiven Verteilen einer Gesamtbremskraft bei einem Anhaltevorgang auf eine Untergruppe aller Reibungsbremseinrichtungen, so dass wenigstens ein Drehgestell oder ein Wagen bremskraftfrei bleibt und die Reibungsbremseinrichtungen der gebremsten Drehgestelle oder Wagen mit einer entsprechend erhöhten Bremskraft beaufschlagt werden.

Durch diese Maßnahmen kann erreicht werden, dass die unerwünschten Reibungsgeräusche an den bremskraftfreien Drehgestellen oder Wagen völlig ausbleiben und an den mit entsprechend erhöhter Bremskraft beaufschlagten Drehgestellen oder Wagen reduziert oder gänzlich vermieden werden, da die erhöhte Bremskraft keine störenden Reibgeräusche verursacht.

Vorzugsweise kann die Vorrichtung ausgestaltet sein, die selektive Bremskraftverteilung im Ansprechen auf ein Triggersignal einzuleiten. Dadurch wird die erfindungsgemäße selektive Bremskraftverteilung nur bei bestimmten Betriebssituationen eingesetzt, in denen unerwünschte Reibungsgeräusche vermieden werden sollen.

Das Triggersignal kann beispielsweise mittels eines Geschwindigkeitssensors bei Unterschreiten einer vorbestimmten Geschwindigkeit des Schienenfahrzeugs erzeugt werden, wobei die Unterschreitung der vorbestimmten Geschwindigkeit einen Anhaltevorgang und damit verbundene Reibungsgeräusche anzeigt.

Zusätzlich oder alternativ kann das Triggersignal durch einen Positionssensor erzeugt werden, der den geografischen Ort des Schienenfahrzeugs angibt, so dass das Triggersignal bei Erreichen einer Position innerhalb eines vorbestimmten Ortsbereichs abgegeben wird. Dadurch kann sichergestellt werden, dass die geräuschreduzierende selektive Bremskraftverteilung nur dort eingesetzt wird, wo die Geräuschentwicklung störend ist.

Vorzugsweise kann die Untergruppe eine vorbestimmte Anzahl von Reibungsbremseinrichtungen umfassen, die sich am Ende des Schienenfahrzeugs befinden, so dass die Reibungsbremseinrichtungen im vorderen Bereich des Schienenfahrzeugs bremskraftfrei bleiben. Dies ist besonders bei Anhaltevorgängen in Bahnhofsbereichen vorteilhaft, da durch diese Maßnahme eine etwaige verbleibende Geräuschentwicklung auf das Ende des Schienenfahrzeugs beschränkt ist. Bei der Untergruppe kann es sich auch nur um die Reibungsbremseinrichtung des hintersten oder letzten Drehgestells oder Wagens des Schienenfahrzeugs handeln.

Die Erfindung betrifft außerdem ein Verfahren zum Steuern einer Bremsanlage mit einer Vielzahl von individuellen Drehgestellen oder Wagen zugeordneten Reibungsbremseinrichtungen eines Schienenfahrzeugs, wobei das Verfahren den Schritt umfasst des selektiven Verteilens einer Gesamtbremskraft auf eine Untergruppe der Reibungsbremseinrichtungen bei einem Anhaltevorgang, so dass wenigstens ein Drehgestell oder ein Wagen bremskraftfrei bleibt und die Reibungsbremseinrichtungen der gebremsten Drehgestelle oder Wagen mit einer entsprechend erhöhten Bremskraft beaufschlagt werden.

Ferner betrifft die Erfindung ein computerlesbares Speichermedium, auf dem ein auf einem Computersystem ausführbarer Programmcode gespeichert ist, welcher die Schritte des vorgenannten Verfahrens erzeugt bzw. implementiert.

Des Weiteren betrifft die Erfindung ein Computerprogramm mit Codemitteln, die bei deren Ausführung auf einem Computersystem die Schritte des vorgenannten Verfahrens erzeugen bzw. implementieren.

Die Erfindung wird nachfolgend anhand von Ausführungsbeispielen unter Bezugnahme auf die beigefügten Zeichnungsfiguren näher erläutert. Es zeigen:
- Fig. 1: ein schematisches Blockschaltbild eines Schienenfahrzeugs mit Bremskraftsteuerungseinrichtung gemäß einem ersten Ausführungsbeispiel;
- Fig. 2: ein Flussdiagramm eines Bremskraftsteuerverfahrens gemäß einem zweiten Ausführungsbeispiel;
- Fig. 3: ein schematisches Diagramm mit einer gleichmäßigen Bremskraftverteilung gemäß dem Stand der Technik; und
- Fig. 4: ein Diagramm mit einer erfindungsgemäßen selektiven Bremskraftverteilung gemäß dem ersten und zweiten Ausführungsbeispiel.

Es folgt eine Beschreibung vorteilhafter Ausführungsbeispiele anhand eines beispielhaften Schienenfahrzeugs mit vier Drehgestellen, die durch entsprechende dynamische Bremseinrichtungen und Reibungsbremseinrichtungen gebremst werden können.

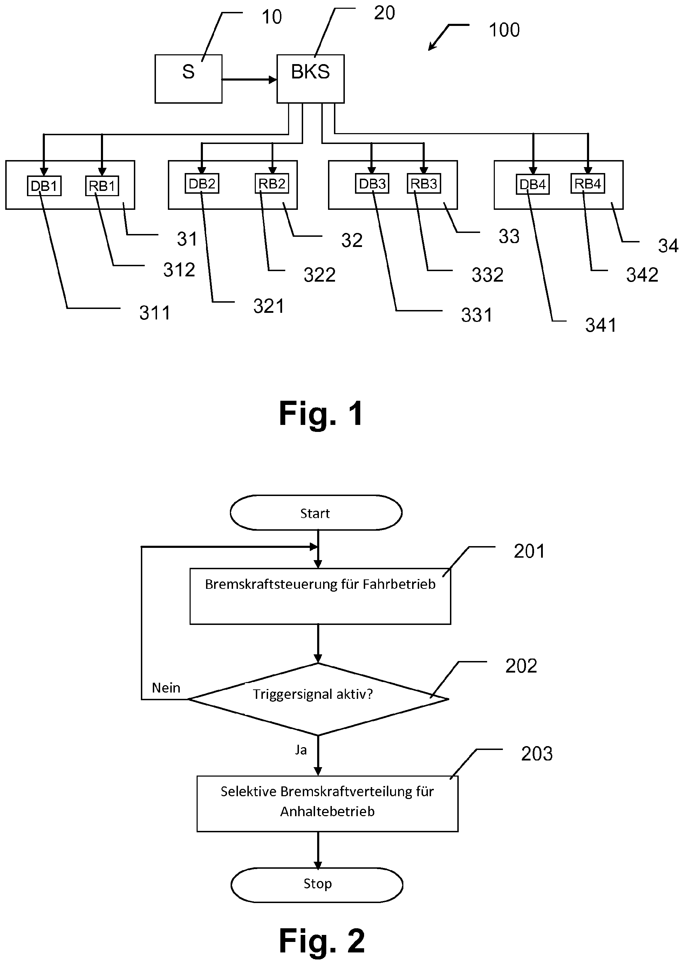

Fig. 1 zeigt ein schematisches Blockschaltbild eines Schienenfahrzeugs 100 mit vier Drehgestellen 31 bis 34, die jeweils mittels einer zugeordneten dynamischen Bremseinrichtung (DB1 bis DB4) 311, 321, 331, 341 und einer Reibungsbremseinrichtung (RB1 bis RB4) 312, 322, 332 und 342 gebremst werden können. Bei den Drehgestellen 31 bis 34 handelt es sich um Laufwerke des Schienenfahrzeugs 100, bei denen zwei oder mehr Radsätze gefedert in einem Rahmen gelagert sein können, der sich bei einer Fahrt des Schienenfahrzeugs 100 auf einem Kreisbogen gegenüber einem entsprechenden Wagenkasten verdrehen kann. Eine solche sogenannte doppelte Drehschemellenkung ermöglicht die Konstruktion längerer Fahrzeuge oder ein Durchfahren engerer Kurven.

Alternativ können die Blöcke 31 bis 34 in Fig. 1 auch entsprechende Wagen des Schienenfahrzeugs 100 kennzeichnen.

Zur Steuerung der durch die dynamischen Bremseinrichtungen 311, 321, 331 und 341 und die Reibungsbremseinrichtungen 312, 322, 332 und 342 zu erzeugenden Bremskräfte ist eine Bremskraftsteuerungseinrichtung 20 vorgesehen, die entsprechende Steuersignale für die jeweiligen Bremseinrichtungen abgibt, um dadurch eine gewünschte Bremskraftverteilung über die verschiedenen Drehgestelle 31 bis 34 zu erzielen.

Bei einem Anhaltevorgang des Schienenfahrzeugs 100 kann die Bremskraftsteuerungseinrichtung 20 bspw. durch ein entsprechendes Triggersignal in eine Betriebsart versetzt werden, bei der die Bremskraft auf die verschiedenen Drehgestelle 31 bis 34 so verteilt wird, dass unerwünschte Reibungsgeräusche weitestgehend vermieden werden. Da die Reibungsgeräusche lediglich durch die Reibungsbremseinrichtungen 312, 322, 332 und 342 generiert werden und die dynamischen Bremseinrichtungen 311, 321, 331 und 341 im Anhaltevorgang typischerweise nicht betrieben werden, kann die zum Anhalten erforderliche Gesamtbremskraft nur auf die Reibungsbremseinrichtungen 312, 322, 332 und 342 verteilt werden. Zur Vermeidung der Reibungsgeräusche wird vorgeschlagen, die herkömmliche gleichmäßige Verteilung der Gesamtbremskraft auf die verschiedenen Drehgestelle 31 bis 34 aufzugeben.

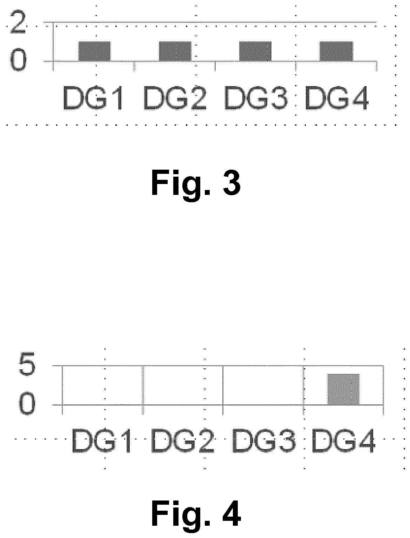

Fig. 3 zeigt eine solche herkömmliche gleichmäßige Bremskraftverteilung am Beispiel des vorliegenden Schienenfahrzeugs mit vier Drehgestellen DG1 bis DG4. Wie in Fig. 3 erkennbar ist, weist die den jeweiligen Reibungsbremseinrichtungen 312, 322, 332 und 342 zugeführte Bremskraft an allen vier Drehgestellen DG1 bis DG4 den relativen Wert "1" auf. Dieser Wert entspricht einer vorbestimmten Bremskraft für eine vorbestimmte Bremswirkung.

Gemäß dem ersten Ausführungsbeispiel wird diese herkömmliche Bremskraftverteilung so verändert, dass eine vorbestimmte Anzahl oder Untergruppe von Drehgestellen oder Wagen bremskraftfrei bleibt und die verbleibende Anzahl oder Untergruppe von Drehgestellen bzw. Wagen mit einer entsprechend erhöhten Bremskraft beaufschlagt werden. Dadurch kann erreicht werden, dass weder bei den ungebremsten Drehgestellen oder Wagen noch bei den mit erhöhter Bremskraft beaufschlagten Drehgestellen oder Wagen ein störendes Reibungsgeräusch erzeugt wird.

Fig. 4 zeigt ein Diagramm mit einer beispielhaften Bremskraftverteilung, bei der die Drehgestelle DG1 bis DG3 bremskraftfrei sind und lediglich das letzte bzw. hinterste Drehgestell DG4 des Schienenfahrzeugs gebremst wird, wobei die zugeführte Bremskraft beispielsweise etwa das Vierfache der jeweils gleichmäßig verteilten Bremskraft eines jeden Drehgestells gemäß Fig. 3 aufweist, um dadurch eine vergleichbare Gesamtbremskraft zu erzielen. Die dem vierten Drehgestell DG4 selektiv zugeführte erhöhte Bremskraft weist somit etwa den relativen Wert "4" auf. Es sei jedoch angemerkt, dass es sich bei dem Beispiel gemäß Fig. 4 lediglich um eine beispielhafte Bremskraftverteilung handelt, die keineswegs einschränkend aufzufassen ist. Gemäß vorliegender Erfindung ist jede andere Bremskraftverteilung möglich, solange wenigstens ein Drehgestell bzw. Wagen des Schienenfahrzeugs bremskraftfrei gesteuert wird.

Das optionale Triggersignal für den selektiven Bremskraftverteilungsbetrieb kann beispielsweise von einem Sensor (S) 10 abgegeben werden, bei dem es sich um einen Positionssensor, einen Geschwindigkeitssensor oder dergleichen handeln kann. Der Positionssensor kann einen geografischen Ort des Schienenfahrzeugs ermitteln, und das Triggersignal abgeben, sobald sich das Schienenfahrzeug 100 in einer Position (an einem Ort) innerhalb eines vorbestimmten Ortsbereichs befindet. Dieser Ortsbereich kann beispielsweise ein Bahnhofsbereich oder ein sonstiger Bereich sein, in dem eine Geräuschentwicklung unerwünscht ist.

Bei dem alternativen oder ergänzenden Geschwindigkeitssensor wird das Triggersignal dann erzeugt, wenn eine vorbestimmte Geschwindigkeit des Schienenfahrzeugs 100 unterschritten wird und dadurch ein eingeleiteter Anhaltevorgang angezeigt wird.

Alternativ kann das Triggersignal auch durch eine manuelle Eingabe des Führers (z.B. Betätigung eines Schalters, Pedals odgl.) des Schienenfahrzeugs 100 erzeugt werden.

Somit kann sichergestellt werden, dass in bestimmten Ortsbereichen, bei bestimmten Geschwindigkeiten, und/oder auf Wunsch des Führers des Schienenfahrzeugs 100 ein Anhaltevorgang ohne störende Reibungsgeräusche oder zumindest mit stark verringerten Reibungsgeräuschen durchführbar ist.

Durch die vorgeschlagene selektive Bremskraftverteilung kann somit die insgesamt zu erzeugende Bremskraft zu dem oder den letzten Drehgestellen des Schienenfahrzeugs "verschoben" werden. Die ersten Drehgestelle bzw. Wagen bleiben dann bremskraftfrei, so dass die zuerst in den Bahnhof einfahrenden Zugteile keine Bremsgeräusche erzeugen und der/die hintere(n) Zugteil€ bzw. die Bremseinrichtungen des/der hinteren Drehgestelle(s) bzw. Wagen in einem besseren Arbeitsbereich betrieben werden und dadurch weniger oder sogar keine Bremsgeräusche erzeugen.

Fig. 2 zeigt ein Flussdiagramm eines Bremskraftsteuerverfahrens gemäß einem zweiten Ausführungsbeispiel, das beispielsweise als Software in einer computergesteuerten Bremssteuerungseinrichtung implementiert werden kann.

Nach dem Programmstart wird im Schritt 201 zunächst eine herkömmliche Bremskraftsteuerung für den Fahrbetrieb des Schienenfahrzeugs unter Zuhilfenahme aller dynamischen Bremseinrichtungen und Reibungsbremseinrichtungen eingeleitet. Danach wird fortlaufend geprüft, ob zumindest ein vorbestimmtes Triggersignal aktiv ist, das die Einleitung eines geräuscharmen Anhaltevorgangs anzeigt. Solange dies nicht der Fall ist, kehrt der Ablauf zurück zum Schritt 201 und die herkömmliche Bremskraftsteuerung für den Fahrbetrieb wird beibehalten. Sobald jedoch im Schritt 202 ein aktives Triggersignal, wie beispielsweise das Signal des Sensors 10 in Fig. 1, erkannt wird, so schreitet der Ablauf zum Schritt 203 und eine Bremskraftsteuerung mit geräuscharmer, selektiver Bremskraftverteilung wird für den Anhaltebetrieb eingeleitet. Dies bedeutet, dass vorbestimmte Reibungsbremseinrichtungen (beispielsweise vorderer Bereich des Schienenfahrzeugs) bremsfrei gesteuert und die verbleibenden Reibungsbremseinrichtungen (beispielsweise hinterer Bereich des Schienenfahrzeugs) mit entsprechend höherer Bremskraft beaufschlagt werden. Danach endet die Steuerprozedur und kann nach dem Anfahren des Schienenfahrzeugs erneut beginnen.

Es wird angemerkt, dass bei den vorstehend beschriebenen Ausführungsbeispielen zusätzliche Parameter für die Bremskraftverteilung herangezogen werden können. Die Beschreibung erfolgte lediglich im Hinblick auf die für die vorliegende Erfindung relevanten Merkmale der Bremskraftsteuerung. Bei der Berechnung und/oder Bestimmung eines zeitlichen Verlaufs der Bremskräfte der Bremsen kann insbesondere die thermische Belastung von Reibkomponenten berücksichtigt werden, die sich auf Reibwerte der Reibkomponenten und somit auf ausgeübte Bremskräfte auswirken können. Die Bremskraftverteilung kann auch für unterschiedliche Bremsbedingungen eine unterschiedliche Verteilung von Bremskraft auf die verschiedenen Bremseinrichtungen vorsehen. Die Optimierung kann dabei für unterschiedliche Bremsbedingungen unterschiedliche Verteilungen der Bremskräfte auf die Bremseinrichtungen ergeben.

Bei der Ermittlung der konkreten Steuersignale für die Bremseinrichtungen des Schienenfahrzeugs können Datensätze herangezogen werden, die Fahrzeugparameter und/oder Bremsanlagenparameter und/oder Bremsbedingungsparameter beschreiben. Eine Konfiguration oder Teile einer Konfiguration aus gespeicherten Datensätzen können über eine Einleseeinrichtung eingelesen und/oder über eine Eingabeschnittstelle von einem Benutzer bereitgestellt werden, um dadurch die Konfiguration und/oder Teile einer Konfiguration festzulegen. Konfigurationsdaten können Datensätze mit Parametern der Konfiguration aufweisen. Es ist vorstellbar, dass mittels der Einleseeinrichtung Konfigurationsdaten aus verschiedenen Konfigurationsdatenquellen eingelesen werden können. Solche Konfigurationsdatenquellen können beispielsweise Dateien und/oder Benutzereingabeschnittstellen sein. Dabei können verschiedene Konfigurationen für eine Schnellbremsung und/oder Notbremsung und/oder Anpassungsbremsung unter verschiedenen Bremsbedingungen vorgesehen sein. Die Bremsbedingungen können dabei insbesondere den Ausfall bestimmter Bremsen oder Bremseinrichtungen, etwa dynamischer Bremsen, und/oder unterschiedliche Anfangsgeschwindigkeiten des Fahrzeugs bei Beginn der Bremsung betreffen.

Somit kann für den Fall einer Notbremsung und/oder Schnellbremsung und/oder Anpassungsbremsung mit unterschiedlichen Bremsanforderungen und/oder bei unterschiedlichen Geschwindigkeiten jeweils eine Optimierung der Bremskraftverteilung auch hinsichtlich der Geräuschentwicklung vorgenommen werden. Die Bremskraftsteuereinrichtung 20 in Fig. 1 kann dann die gespeicherten Steuerdaten in Steuerbefehle zur Ansteuerung der Bremseinrichtungen umsetzen, wobei die Steuerdaten beispielsweise tabellarisch und/oder in Form eines Algorithmus und/oder in Form von Steuerbefehlen für die Bremskraftsteuerungseinrichtung 20 bereitgestellt sein können. Die Daten können beispielsweise auf geeignete Weise auf einem Speichermedium gespeichert sein.

Ferner kann die Bremskraftsteuerungseinrichtung 20 auch durch eine programmgesteuerte Computereinrichtung realisiert sein, bei der die Schritte der Fig. 2 und auch die Verarbeitung der Steuerdaten in Steuerbefehle oder Steuersignale für die Bremseinrichtungen mittels eines Computerprogramms gesteuert wird, das beispielsweise auf einem computerlesbaren Speichermedium gespeichert ist oder über ein Netzwerk wie beispielsweise das Internet oder eine lokales Netz herunterladbar ist.

### BEZUGSZEICHENLISTE

- 10: Sensoreinrichtung
- 20: Bremskraftsteuerungseinrichtung
- 31-34: Drehgestell 1-4
- 100: Schienenfahrzeug
- 201-203: Schritte des Bremskraftsteuerverfahrens
- 311, 321, 331, 341: dynamische Bremseinrichtung 1-4
- 312, 322, 332, 342: Reibungsbremseinrichtung

## Patentansprüche

1. Vorrichtung (20) zur Steuerung einer Bremsanlage mit einer Vielzahl von individuellen Drehgestellen (31-34) oder Wagen zugeordneten Reibungsbremseinrichtungen (312, 322, 332, 342) eines Schienenfahrzeugs (100), wobei die Vorrichtung (20) ausgestaltet ist zum selektiven Verteilen einer Gesamtbremskraft auf eine Untergruppe aller Reibungsbremseinrichtungen, wobei die Vorrichtung (20) ausgestaltet ist, die selektive Bremskraftverteilung im Ansprechen auf ein Triggersignal einzuleiten, **dadurch gekennzeichnet, dass** die Vorrichtung (20) konfiguriert ist, dass bei einem Anhaltevorgang die Gesamtbremskraft so verteilt wird, dass wenigstens ein Drehgestell oder ein Wagen bremskraftfrei bleibt und die Reibungsbremseinrichtungen der gebremsten Drehgestelle oder Wagen mit einer entsprechend erhöhten Bremskraft beaufschlagt sind, und
die Vorrichtung (20)
einen Geschwindigkeitssensor (10) aufweist, der das Triggersignal bei Unterschreitung einer vorbestimmten Geschwindigkeit des Schienenfahrzeugs (100) abgibt, oder
einen Positionssensor (10) aufweist, der das Triggersignal bei Erreichen einer Position innerhalb eines vorbestimmten Ortsbereiches abgibt.

2. Vorrichtung nach Anspruch 1, wobei die selektive Bremskraftverteilung der Vorrichtung so konfiguriert ist, dass die Untergruppe eine vorbestimmte Anzahl von Reibungsbremseinrichtungen (342) umfasst, die sich am Ende des Schienenfahrzeugs (10) befinden, so dass die Reibungsbremseinrichtungen (312, 322, 332) im vorderen Bereich des Schienenfahrzeugs (100) bremskraftfrei bleiben.

3. Vorrichtung nach Anspruch 2, wobei die selektive Bremskraftverteilung der Vorrichtung so konfiguriert ist, dass die Untergruppe nur die Reibungsbremseinrichtung des hintersten Drehgestells (34) oder Wagens des Schienenfahrzeugs (100) umfasst.

4. Schienenfahrzeug (100) mit einer Vielzahl von Reibungsbremseinrichtungen (312, 322, 332, 342) und zumindest einem Triebwagen mit einer Vorrichtung nach einem der Ansprüche 1 bis 3.

5. Triebwagen mit einer Vorrichtung nach einem der Ansprüche 1 bis 3.

6. Verfahren zum Steuern einer Bremsanlage mit einer Vielzahl von individuellen Drehgestellen (31-34) oder Wagen zugeordneten Reibungsbremseinrichtungen (312, 322, 323, 324) eines Schienenfahrzeugs (100), wobei das Verfahren den Schritt umfasst des selektiven Verteilens einer Gesamtbremskraft auf eine Untergruppe der Reibungsbremseinrichtungen (312, 322, 323, 324) bei einem Anhaltevorgang, so dass wenigstens ein Drehgestell oder ein Wagen bremskraftfrei bleibt und die Reibungsbremseinrichtungen der gebremsten Drehgestelle oder Wagen mit einer entsprechend erhöhten Bremskraft beaufschlagt werden, und des Weiteren den Schritt des Erzeugens des Triggersignals bei Unterschreiten einer vorbestimmten Geschwindigkeit des Schienenfahrzeugs (100) oder bei Erreichen eines vorbestimmten Ortsbereichs durch das Schienenfahrzeug (100).

7. Verfahren nach Anspruch 6, wobei der Schritt des selektiven Verteilens der Bremskraft im Ansprechen auf den Empfang eines Triggersignals erfolgt.

8. Computerprogramm mit Codemitteln, umfassend Befehle, die bewirken, dass bei ihrer Ausführung auf einem Computersystem die Schritte eines der Verfahrensansprüche 6 oder 7 durch eine computergesteuerte Bremssteuerungseinrichtung mittels einer Vorrichtung gemäß einem der Ansprüche 1 bis 3 ausgeführt werden.

9. Computerlesbares Speichermedium, auf dem ein Computerprogramm gemäß Anspruch 8 gespeichert ist.

## Claims

1. Device (20) for controlling a brake system having a multiplicity of friction brake devices (312, 322, 332, 342), assigned to individual bogies (31-34) or cars, of a rail vehicle (100), wherein the device (20) is designed to selectively distribute a total braking force to a subgroup of all the friction brake devices, wherein the device (20) is configured to initiate the selective braking force distribution in response to a trigger signal, **characterized in that** the device (20) is designed such that, in the case of a stopping process, the total braking force is distributed such that at least one bogie or one car remains free of braking force and a correspondingly increased braking force is applied to the friction brake devices of the braked bogies or cars, and
the device (20)
has a speed sensor (10) which outputs the trigger signal when a predetermined speed of the rail vehicle (100) is undershot, or
has a position sensor (10) which outputs the trigger signal when a position within a predetermined local area is reached.

2. Device according to Claim 1, wherein the selective braking force distribution of the device is configured such that the subgroup comprises a predetermined number of friction brake devices (342) which are located at the end of the rail vehicle (10), with the result that the friction brake devices (312, 322, 332) remain free of braking force in the front area of the rail vehicle (100) .

3. Device according to Claim 2, wherein the selective braking force distribution of the device is configured such that the subgroup comprises only the friction brake device of the rearmost bogie (34) or car of the rail vehicle (100).

4. Rail vehicle (100) having a multiplicity of friction brake devices (312, 322, 332, 342) and at least one power car having a device according to one of Claims 1 to 3.

5. Power car having a device according to one of Claims 1 to 3.

6. Method for controlling a brake system having a multiplicity of friction brake devices (312, 322, 323, 324), assigned to individual bogies (31-34) or cars, of a rail vehicle (100), wherein the method comprises the step of selective distribution of a total braking force to a subgroup of the friction brake devices (312, 322, 323, 324) in the case of a stopping process, with the result that at least one bogie or one car remains free of braking force and a correspondingly increased braking force is applied to the friction brake devices of the braked bogies or cars, and also the step of generating the trigger signal when a predetermined speed of the rail vehicle (100) is undershot, or when a predetermined local area is reached by the rail vehicle (100).

7. Method according to Claim 6, wherein the step of selectively distributing the braking force takes place in response to the reception of a trigger signal.

8. Computer program having code means, comprising instructions which, when executed on a computer system, cause the steps of one of method Claims 6 and 7 to be executed by a computer-controlled brake control device by means of a device according to one of Claims 1 to 3.

9. Computer-readable storage medium, on which a computer program according to Claim 8 is stored.

## Revendications

1. Système (20) de commande d'une installation de freinage par des dispositifs (312, 322, 332, 342) de frein à friction affectés à une pluralité de bogies (31 - 34) ou de matériels remorqués individuels d'un véhicule (100) ferroviaire, dans lequel le système (20) est conformé pour répartir sélectivement une force de frein d'ensemble sur un sous-groupe de tous les dispositifs de frein à friction, dans lequel le système (20) est conformé pour lancer la répartition sélective de force de frein en réaction à un signal de déclenchement, **caractérisé en ce que** le système (20) est configuré pour répartir la force de frein d'ensemble lors d'un arrêt, de manière à ce qu'au moins un bogie ou un matériel remorqué reste sans force de frein et de manière à ce que les dispositifs de frein à friction des bogies ou des matériels remorqués freinés soient soumis à une force de frein augmentée de manière correspondante, et
le système (20)
a un capteur (10) de vitesse, qui émet le signal de déclenchement lorsque l'on passe en-dessous d'une vitesse définie à l'avance du véhicule (100) ferroviaire, ou
a un capteur (10) de position, qui émet le signal de déclenchement lorsqu'est atteinte une position dans une plage d'emplacements définie à l'avance.

2. Système suivant la revendication 1, dans lequel la répartition sélective de la force de frein du système est configurée de manière à ce que le sous-groupe comprenne un nombre défini à l'avance de dispositifs (342) de frein à friction, qui se trouvent au bout du véhicule (10) ferroviaire, de manière à ce que les dispositifs (312, 322, 332) de frein à friction, dans la partie la plus en avant du véhicule (100) ferroviaire, restent sans force de frein.

3. Système suivant la revendication 2, dans lequel la répartition sélective de la force de frein du système est configurée de manière à ce que le sous-groupe ne comprenne que le dispositif de frein à friction du bogie (34) ou du matériel remorqué le plus en arrière du véhicule (100) ferroviaire.

4. Véhicule (100) ferroviaire ayant une pluralité de dispositifs (312, 322, 332, 342) de frein à friction et au moins une motrice ayant un système suivant l'une des revendications 1 à 3.

5. Motrice ayant un système suivant l'une des revendications 1 à 3.

6. Procédé de commande d'une installation de frein ayant des dispositifs (312, 322, 323, 324) de frein à friction affectés à une pluralité de bogies (31 - 34) ou de matériels remorqués individuels d'un véhicule (100) ferroviaire, dans lequel le procédé comprend le stade de la répartition sélective d'une force de frein d'ensemble sur un sous-groupe des dispositifs (312, 322, 323, 324) de frein à friction lors d'un arrêt, de manière à ce qu'au moins un bogie ou un matériel remorqué reste sans effet de frein et que les dispositifs de frein à friction ou des bogies ou matériels remorqués freinés soient soumis à une force de frein augmentée de manière correspondante, et comprenant en outre le stade de la production du signal de déclenchement lorsque l'on passe en-dessous d'une vitesse définie à l'avance du véhicule (100) ferroviaire ou lorsqu'est atteinte une plage d'emplacements définie à l'avance par le véhicule (100) ferroviaire.

7. Procédé suivant la revendication 6, dans lequel on effectue le stade de la répartition sélective de la force de frein en réaction à la réception d'un signal de déclenchement.

8. Programme d'ordinateur, ayant des moyens de code, comprenant des instructions, qui font que, lorsqu'elles sont réalisées sur un système informatique, les stades de l'un de l'une des revendications 6 ou 7 de procédé sont effectués par un dispositif de commande de frein commandé par ordinateur au moyen d'un système suivant l'une des revendications 1 à 3.

9. Support de mémoire, déchiffrable par ordinateur, sur lequel un programme d'ordinateur suivant la revendication 8 est mis en mémoire.
